# EUROPEAN PATENT APPLICATION

(11) **EP 4 644 660 A1**
(43) Date of publication of application: **05.11.2025**
(21) Application number: 25172514.9
(22) Date of filing: 25.04.2025
(51) Int. Cl.: E21B 10/26, E21B 10/40, E21B 10/62

(54) **RINGBIT FOR DRILLING TOOL AND DRILLING TOOL**

(30) Priority: 03.05.2024 FI 20245553
(71) Applicant: Robit Plc, 33880 Lempäälä (FI)
(72) Inventor: HOLLO, Jaakko, 33880 Lempäälä (FI)
(74) Representative: Boco IP Oy Ab

(57) **Abstract**

A ring bit (3) comprises an annular or cylindrical shape. The ring bit (3) is configured to be provided around a pilot bit (2) at a distal end (5) of a drilling tool (1) concentrically with the pilot bit (2). The ring bit (3) comprises at least one protrusion (6) protruding inwards from a first surface (7) provided inside the ring bit (3), and at least one ring bit pulling surface (13), which ring bit pulling surface (13) is formed in the protrusion (6) and formed in relation to a radial direction (14) of the ring bit (3) in a direction of a longitudinal axis (4) of the drilling tool (1) in such a manner that a first length (16) of the protrusion (6) at the first surface (7) in the direction of the longitudinal axis (4) is greater than a second length (20) of the protrusion (6) at a second surface (15). The second surface (15) is defined by the inner-most surface of the protrusion (6) and the first surface (7) is provided at the base of the protrusion (6) on the pulling surface (13) side of the protrusion (6).

## Description

### FIELD OF THE DISCLOSURE

The disclosure relates to drilling, and more particularly to a drilling tool. The present disclosure further concerns a ring bit for a drilling tool.

### BACKGROUND OF THE DISCLOSURE

Drilling tools are used in drilling machines, more particularly at a distal end of drilling machines provided against material to be drilled.

During percussive drilling, a striking force is transmitted to the drilling tool and thereby to the material to be drilled by the drilling machine. One known configuration of a drilling tool for percussive drilling comprises a pilot bit and a ring bit. The pilot bit may form a center of the foremost part of the drilling tool, whereas the ring bit may be provided to extend around the pilot bit and comprises a diameter larger than that of the pilot bit to encircle and support the pilot bit and also to reduce wear of the pilot bit.

The ring bit may be locked to the pilot bit for instance by a bayonet locking element or similar, where counter parts of the locking element are provided in the pilot bit and the ring bit. The locking elements have to be strong enough and to have enough material to be able to receive the striking and pulling forces without breaking. In conventional drilling tools, this problem has been solved by forming the locking elements long in the longitudinal direction of the drilling tool. This, however, has forced the ring bits to be long as well.

### BRIEF DESCRIPTION OF THE DISCLOSURE

An object of the present disclosure is to provide a new ring bit and a new drilling tool.

The object of the disclosure is achieved by a ring bit and a drilling tool, which are characterized by what is stated in the independent claims. Some embodiments of the disclosure are disclosed in the dependent claims.

The disclosure is based on the idea of forming ring bit pulling surface in a direction of a longitudinal axis of the drilling tool in such a manner that a first length of a protrusion participating in locking of the ring bit and the pilot bit to each other at a first surface is, in the direction of the longitudinal axis, greater than a second length of the protrusion at a second surface, wherein the second surface is defined by the inner-most surface of the protrusion and the first surface is provided at the base of the protrusion on the pulling surface 13 side of the protrusion 6.

An advantage of the disclosure is that the ring bit can be made shorter while maintaining the strength of the drilling tool needed.

### BRIEF DESCRIPTION OF THE DRAWINGS

In the following the disclosure will be described in greater detail by means of preferred embodiments with reference to the accompanying drawings, in which
Figure 1 illustrates schematically a ring bit according to an embodiment seen from a distal end;
Figure 2 illustrates schematically a ring bit of Figure 1 shown in cross section in direction B-B indicated in Figure 1;
Figure 3 illustrates schematically a pilot bit to an embodiment shown in perspective;
Figure 4 illustrates schematically a cross section of a pilot bit to an embodiment;
Figure 5 illustrates schematically a cross section of a drilling tool to an embodiment;
Figure 6 illustrates schematically a detail of a drilling tool to an embodiment shown partially in cross section;
Figure 7 illustrates schematically a drilling tool to an embodiment shown in perspective; and
Figure 8 illustrates schematically a detail of a drilling tool to an embodiment shown partially in cross section.

### DETAILED DESCRIPTION OF THE DISCLOSURE

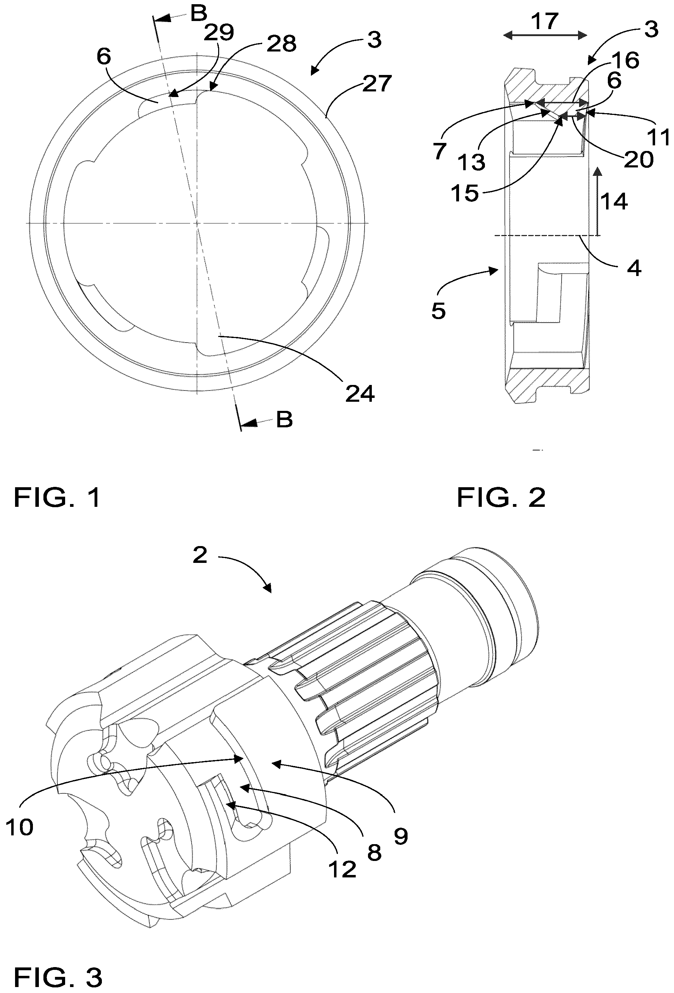

Figure 1 illustrates schematically a ring bit seen from a distal end, and Figure 2 illustrates schematically a ring bit shown in cross section in direction B-B indicated in Figure 1.

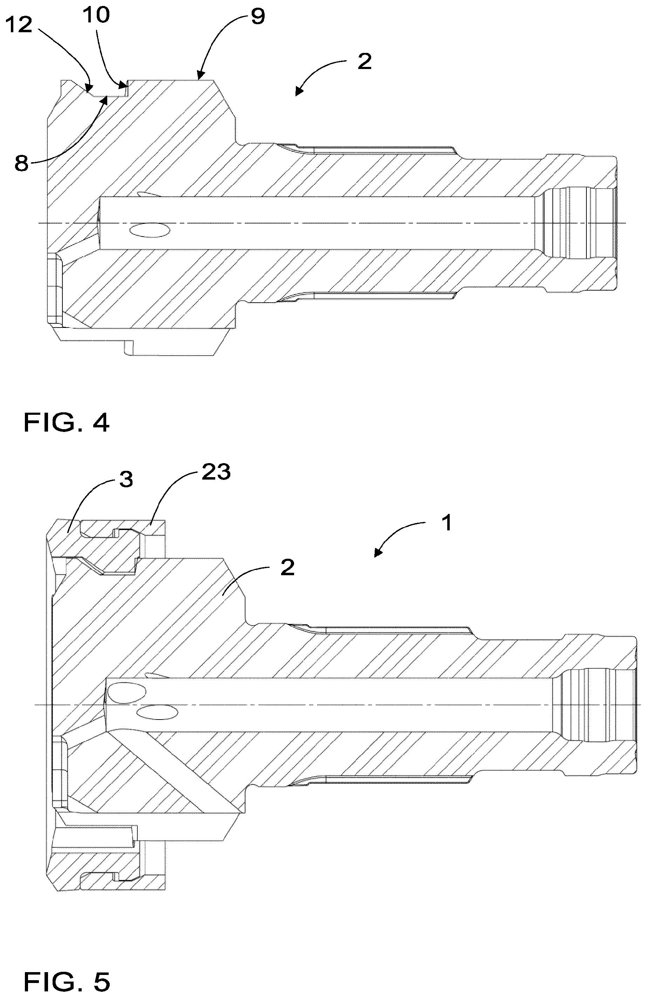

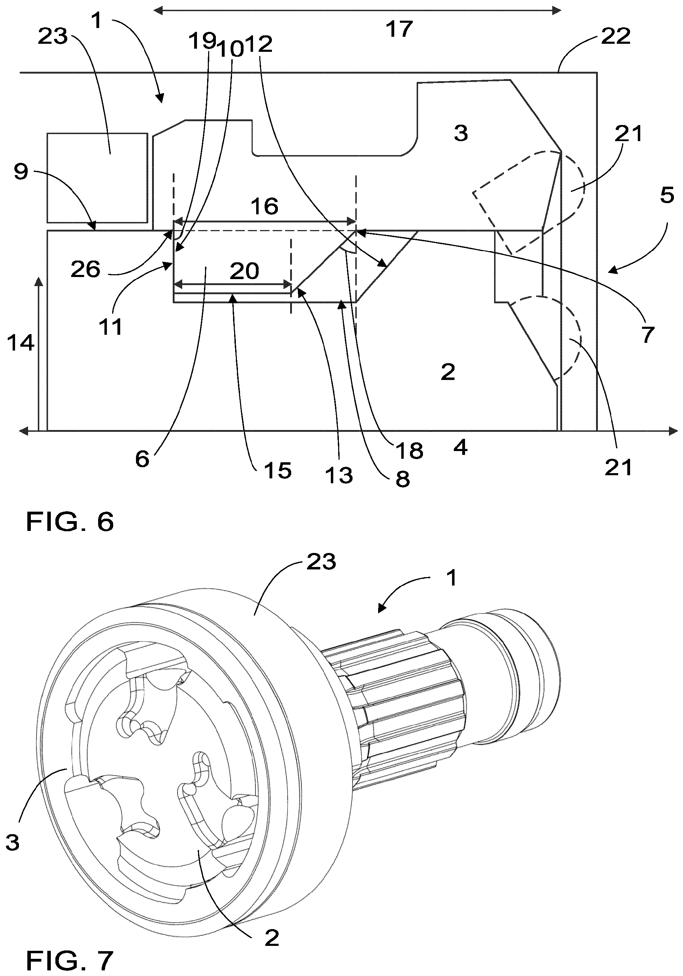

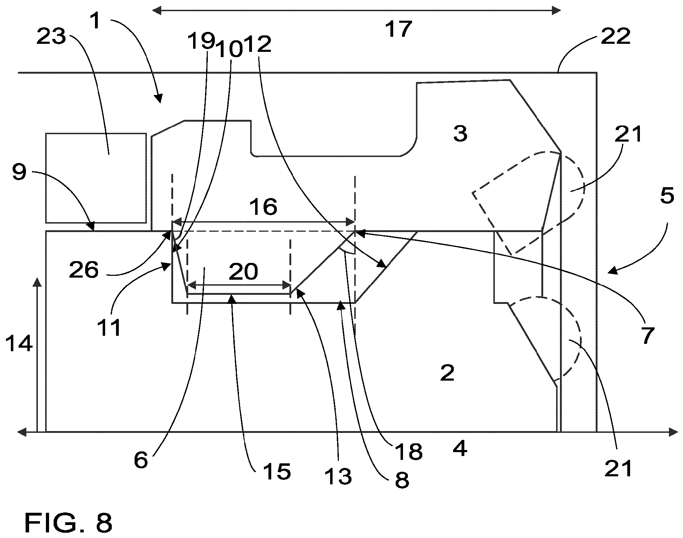

Figure 3 illustrates schematically a pilot bit to an embodiment shown in perspective, Figure 4 illustrates schematically a cross section of a pilot bit to an embodiment, Figure 5 illustrates schematically a cross section of a drilling tool to an embodiment, Figure 6 illustrates schematically a detail of a drilling tool to an embodiment shown partially in cross section, Figure 7 illustrates schematically a drilling tool to an embodiment shown in perspective, and Figure 8 illustrates schematically a detail of a drilling tool to an embodiment shown partially in cross section.

A ring bit 3 for a drilling tool 1, such as the ring bit 3 in Figures 1 and 2, comprises an annular or cylindrical shape. The drilling tool 1, such as a drilling tool 1 of Figure 5, 6, 7 and/or 8, may comprise at least the ring bit 3 and a pilot bit 2.

The ring bit 3 is configured to be provided around the pilot bit 2, such as for instance a pilot bit 2 of Figure 3 or 4, at a distal end 5 of the drilling tool 1. The ring bit 3 is configured to be provided concentrically with the pilot bit 2. In other words, the ring bit 3 and the pilot bit 2 of the drilling tool 1 are designed to share a common axis. More particularly, this common longitudinal axis of the pilot bit 2 and the ring bit 3 is a longitudinal axis 4 of the drilling tool 1. The ring bit 3 is, thus, designed to extend around the pilot bit 2 along the longitudinal axis 4 of the drilling tool 1 and, thus, the pilot bit 2. However, the length of the ring bit 3 in the direction of the longitudinal axis 4 may be different than the length of the pilot bit 2. According to an embodiment, the length of the ring bit 3 in the direction of the longitudinal axis 4 may be shorter than the length of the pilot bit 2.

The ring bit 3 comprises at least one protrusion 6 protruding inwards from a first surface 7 provided inside the ring bit 3. According to an embodiment, the protrusion 6 may be configured to be received in a groove 8 provided in the pilot bit 2 to engage the ring bit 3 to the pilot bit 2.

The ring bit 3 comprises at least one ring bit pulling surface 13. In this disclosure, striking force refers to a force directed towards the distal end 5 of the drilling tool 1 configured to be placed against a material to be drilled, and pulling force is a force directed in a direction opposite to the direction of the striking force. The ring bit pulling surface 13 comprises the surface, which is designed to receive at least a most part of the pulling force applied to the ring bit 3, when the pilot bit 2 is pulled in the direction of the pulling force in relation to the ring bit 3. In other words, when a drilling tool 1 is provided in a drilling hole, the striking force is directed deeper into the drilling hole and the pulling force is directed outwards from the drilling hole.

The ring bit pulling surface 13 is formed in the protrusion 6. In other words, the ring bit pulling surface 13 comprises a surface of the ring bit 3 within the area of the protrusion 6.

The ring bit pulling surface 13 is formed in relation to a radial direction 14 of the ring bit 3 in a direction of a longitudinal axis 4 of the drilling tool 1 in such a manner that a first length 16 of the protrusion 6 at the first surface 7 in the direction of the longitudinal axis 4 is greater than a second length 20 of the protrusion 6 at a second surface 15, wherein the second surface 15 is defined by the inner-most surface of the protrusion 6 and the first surface 7 is provided at the base of the protrusion 6 on the pulling surface 13 side of the protrusion 6. In other words, the ring bit pulling surface 13 extends from the first surface 7 of the ring bit 3 towards the second surface 15 of the ring bit 3 in a direction, which is different from a radial direction 14 and which direction, instead, comprises components extending in both the radial direction 14 and the direction of the longitudinal axis 4. An advantage of such a ring bit 3 is that the ring bit 3 can be made shorter than in conventional solutions, where the first length 16 and the second length 20 of the protrusion are equal or substantially equal, while maintaining the strength of the drilling tool 1 needed for drilling.

Preferably, the second length 20 may be less than or equal to 80 percent of the first length 16. According to an embodiment, the second length 20 may be in the range of 0 to 80 percent of the first length 16. According to another embodiment, the second length 20 may be in the range of 0 to 75 percent of the first length 16. According to a further embodiment, the second length 20 may be in the range of 0 to 70 percent of the first length 16. According to a further embodiment, the second length 20 may be in the range of 0 to 60 percent of the first length 16. The second length 20 possibly being 0 percent of the first length 16 refers to the possibility of the second length being very short in some embodiments, whereby the ratio between the second length 20 and the first length 16 is close to 0. It does not refer to the second length 20 being non-existing.

The second surface 15 being defined by the inner-most surface of the protrusion 6 refers to the second surface 15 comprising a surface of the protrusion 6 configured to face the pilot bit 2, when the ring bit 3 is engaged with the pilot bit 2, and to comprise the part of the protrusion 6 provided closest to the longitudinal axis of the ring bit 3.

The first surface 7 being provided at the base of the protrusion 6 on the pulling surface 13 side of the protrusion 6 refers to the first surface 7 comprising a surface of the ring bit 3 extending in a circumferential direction from a linear area of the ring bit 3 defining an edge of the protrusion 6 on one side of the protrusion 6, where the protrusion 6 starts to protrude towards the second surface 15 in the longitudinal direction of the ring bit 3. In other words, all the points of the first surface 7 are at an equal distance from the longitudinal axis of the ring bit 3 and the drilling tool 1 as the points at the edge of the protrusion 6. The first surface 7 may preferably extend as an actual surface of the ring bit 3 in the longitudinal and/or the circumferential direction directed away from the protrusion 6. In the area of the protrusion 6, the first surface 7 continues as a virtual surface extending within the protrusion 6 at the same length from the longitudinal axis of the ring bit 3 as the part of the surface at the edge of the protrusion 6 and/or the part of the first surface 7 directed away from the protrusion 6 in the longitudinal direction and/or in the circumferential direction. The first length 16 may, in some embodiments, be measured along the virtual surface part of the first surface 7.

The first length 16 may comprise a distance of two points of the first surface 7 provided on opposite sides of the protrusion 6 along a longitudinal direction of the ring bit 3. The second length 20 may comprise a distance of two points of the second surface 15 provided on opposite sides of the protrusion 6 along a longitudinal direction of the ring bit 3. The longitudinal direction on the ring bit 3 refers to a direction parallel to the longitudinal axis 4 of the drilling tool 1 and, thus, the ring bit 3.

As the first length 16 of the protrusion 6 at the first surface 7 in the direction of the longitudinal axis 4 is greater than the second length 20 of the protrusion 6 at a second surface 15, the protrusion 6 has, at least at one point of the protrusion, a longer length at the first surface 7 than at the second surface 15. The form of the ring bit pulling surface 13 is, thus, configured to make the protrusion 6 narrower at the end directed towards the pilot bit 2, when the ring bit 3 is arranged around the pilot bit 2, than at the end of the protrusion 6 connected to the rest of the ring bit 3.

According to an embodiment, the first length 16 of the protrusion and the second length 20 of the protrusion are measured along a same radial plane 24. The radial plane 24 refers to a plane extending in a direction parallel to the longitudinal axis 4 of the drilling tool 1 and, thus, the ring bit 3, and also extending in a radial direction of the ring bit 3 extending via the longitudinal axis 4.

According to an embodiment, the first length 16 of the protrusion 6, namely the first length 16 of the protrusion 6 at the first surface 7 in the direction of the longitudinal axis 4, is greater than the second length 20 of the protrusion 6, namely the second length 20 of the protrusion at the second surface 15 in the direction of the longitudinal axis 4, at least at one point of the protrusion 6 in the direction of the circumference 27 of the ring bit 3. According to an embodiment, the first length 16 of the protrusion 6 is greater than the second length 20 of the protrusion 6 at least at a point spaced from a circumferential edge 28 of the protrusion 6, namely at a point of the protrusion 6 other than a point of the circumferential edge 28 of the protrusion 6, wherein the circumferential edge 28 of the protrusion 6 comprises an edge, where the protrusion starts protruding from the first surface 7 in the circumferential direction 27 of the ring bit 3. In Figure 1, one embodiment of such a point of the protrusion 6 is indicated by reference number 29 but it is clear for a person skilled in the art that this is just one example of such a point. According to a further embodiment, the first length 16 of the protrusion 6 is greater than the second length 20 of the protrusion 6 over the whole width of the protrusion 6 in the direction of the circumference 27 of the ring bit 3.

According to an embodiment, the ring bit pulling surface 13 is formed in relation to a radial direction 14 of the ring bit 3 in a direction of a longitudinal axis 4 of the drilling tool 1 in such a manner that the first length 16 of the protrusion 6 is greater than the second length 20 of the protrusion 6 by providing at least a part of the ring bit pulling surface 13 at an angle 18 in relation to a radial direction 14 of the ring bit 3 in a direction of a longitudinal axis 4 of the drilling tool 1, such as shown for instance in Figures 6 and 8. According to another embodiment, the ring bit pulling surface 13 is formed in relation to a radial direction 14 of the ring bit 3 in a direction of a longitudinal axis 4 of the drilling tool 1 in such a manner that the first length 16 of the protrusion 6 is greater than the second length 20 of the protrusion 6 by providing the ring bit pulling surface 13 at an angle 18 in relation to a radial direction 14 of the ring bit 3 in a direction of a longitudinal axis 4 of the drilling tool 1. According to an embodiment, the angle 18 between the ring bit pulling surface 13 and the radial direction 14 of the ring bit 3 is greater than or equal to 10 degrees, preferably in the range of 10 to 70 degrees, and most preferably in the range of 20 to 70 degrees. According to an embodiment, the ring bit pulling surface 13 is formed in relation to a radial direction 14 of the ring bit 3 in a direction of a longitudinal axis 4 of the drilling tool 1 in such a manner that the first length 16 of the protrusion 6 is greater than the second length 20 of the protrusion 6 by forming at least a part of the ring bit pulling surface 13 as a surface curved in relation to a radial direction 14 of the ring bit 3 in a direction of a longitudinal axis 4 of the drilling tool 1.

According to an embodiment, the ring bit 3 is provided, at one end, with inserts 21 for transferring impacts to points of contact with a borehole 22. More particularly, the ring bit 3 may be provided with the inserts 21 at a distal end of the ring bit 3, namely the end of the ring bit 3 configured to be directed towards the borehole 22. According to an embodiment, the ring bit pulling surface 13 is provided on the side of the protrusion 6 directed towards the end provided with the inserts 21, in other words the distal end.

According to an embodiment, the first length 16 of the protrusion 6 is in the range of 30 to 100 percent, preferably in the range of 40 to 100 percent, more preferably in the range of 45 to 100 percent and most preferably in the range of 50 to 100 percent, of the length 17 of the ring bit 3 in the direction of the longitudinal axis 4 of the drilling tool 1 and, thus, the ring bit 3. The length 17 of the ring bit 3 refers to the furthest distance of points at opposite edges of the ring bit 3 in the longitudinal direction of the ring bit 3, which is a direction parallel to the longitudinal axis 4 of the drilling tool 1. In embodiments, where the ring bit 3 comprises inserts 21, the length 17 of the ring bit 3 is measured from the distal end of the ring bit 3 itself, excluding the inserts 21, as shown in Figures 6 and 8.

Figure 3 illustrates schematically a cross section of a drilling tool, Figure 4 illustrates schematically a detail of a drilling tool shown partially in cross section, and Figure 5 illustrates schematically a drilling tool shown in perspective.

According to an aspect, a drilling tool 1 comprises a longitudinal axis 4, a distal end 5 at the end of the drilling tool 1 configured to be provided against a material to be drilled, a pilot bit 2, and a ring bit 3. The ring bit 3 has an annular or cylindrical shape. The ring bit 3 is provided around the pilot bit 2 at the distal end 5 of the drilling tool 1 concentrically with the pilot bit 2.

The drilling tool 1 further comprises at least one protrusion 6 provided in the ring bit 3 and protruding inwards from the first surface 7 of the ring bit 3.

The drilling tool 1 also comprises at least one groove 8 provided on an outer surface 9 of the pilot bit 2 and shaped to receive the protrusion 6, namely the protrusion 6 in the ring bit 3, and conform at least partly to the shape of the protrusion 6.

According to an embodiment, the at least one groove 8 and the protrusion 6 are shaped in such a manner that when the protrusion 6 is received in the groove 8, the mutual movement of the ring bit 3 and the pilot bit 2 is limited in at least one mutual position of the ring bit 3 and the pilot bit 2 by the protrusion 6 provided in the groove 8 at least in the direction of the longitudinal axis 4 of the drilling tool 1. In other words, the groove 8 and the protrusion 6 may form a locking element for the ring bit 3 and the pilot bit 2 limiting the mutual movement of the ring bit 3 and the pilot bit 2. According to an embodiment, the at least one groove 8 and the protrusion 6 are shaped in such a manner that when the protrusion 6 is received in the groove 8, the mutual movement of the ring bit 3 and the pilot bit 2 is limited in at least one mutual position of the ring bit 3 and the pilot bit 2 by the protrusion 6 provided in the groove 8 at least in one of the rotational directions of the ring bit 3 about the longitudinal axis 4. According to an embodiment, the protrusion 6 in the ring bit 3 and the groove 8 in the pilot bit 2 are formed to limit the mutual movement of the ring bit 3 and the pilot bit 2 in at least one mutual position of the ring bit 3 and the pilot bit 2 by the protrusion 6 provided in the groove 8 at least in the direction of the longitudinal axis 4 of the drilling tool 1 and in one of the rotational directions of the ring bit 3 about the longitudinal axis 4. According to such an embodiment, the groove 8 and the protrusion 6 may form a bayonet-type locking element, or similar, for the ring bit 3 and the pilot bit 2.

According to an embodiment, the mutual movement of the ring bit 3 and the pilot bit 2 in at least one mutual position of the ring bit 3 and the pilot bit 2 is limited in the direction of the longitudinal axis 4 of the drilling tool 1 by the edges of the protrusion 6 of the ring bit 3 in the longitudinal direction and their counter surface provided in the pilot bit 2. According to an embodiment, the mutual movement of the ring bit 3 and the pilot bit 2 in at least one mutual position of the ring bit 3 and the pilot bit 2 is limited in one of the rotational directions of the ring bit 3, namely one of the rotational directions about the longitudinal axis 4 of the drilling tool 1, by at least one edge of the protrusion 6 of the ring bit 3 in the circumferential direction 27 of the ring bit 3, such as the circumferential edge 28, and its counter surface provided in the pilot bit 2. According to an embodiment, the protrusion 6 and its counter surface provided in the pilot bit 2 may form counter parts, which act as locking members, together forming a locking element for the ring bit 3 and the pilot bit 2. In other words, the counter parts of the locking element may be provided in the pilot bit 2 and the ring bit 3, whereby the ring bit 3 may be locked to the pilot bit 2, for instance by a bayonet locking element or similar.

According to the aspect, the pilot bit 2 is configured to transmit a striking force to the ring bit 3 via a contact between a pilot bit striking surface 10 and a ring bit striking surface 11, and the pilot bit 2 is configured to transmit a pulling force to the ring bit 3 via a pilot bit pulling surface 12 and a ring bit pulling surface 13.

According to the aspect, at least a part of the pilot bit striking surface 10 and the pilot bit pulling surface 12 are provided at opposite ends of the groove 8, namely at opposite ends of the groove 8 in the longitudinal direction, at least a part of the ring bit striking surface 11 and the ring bit pulling surface 13 are provided at opposite ends of the protrusion 6, namely at opposite ends of the protrusion 6 in the longitudinal direction, and the pilot bit pulling surface 12 and the ring bit pulling surface 13 are provided at the end of the pilot bit 2 and the ring bit 3, respectively, which is directed towards the distal end 5, namely the distal end 5 of the drilling tool 1.

According to the aspect, at least the pilot bit pulling surface 12 and the ring bit pulling surface 13 are formed in relation to a radial direction 14 of the ring bit 3 in a direction of the longitudinal axis 4 of the drilling tool 1 in such a manner that the first length 16 of the protrusion 6 at the first surface 7 in the direction of the longitudinal axis 4 is greater of the ring bit 3 than the second length 20 of the protrusion 6 at a second surface 15, wherein the second surface 15 is defined by the inner-most surface of the protrusion 6 and the first surface 7 is provided a the base of the protrusion 6 on the pulling surface 13 side of the protrusion 6. This may be implemented according to an embodiment, or a combination of embodiments disclosed in connection with the ring bit embodiments.

According to an embodiment, the ring bit pulling surface 13 and the pilot bit pulling surface 12 are provided at an angle in relation to a radial direction 14 of the ring bit 3 in a direction of a longitudinal axis 4 of the drilling tool 1. According to an embodiment, the angle 18 between the ring bit pulling surface 13 and the radial direction 14 of the ring bit 3 is greater than or equal to 10 degrees, preferably in the range of 10 to 70 degrees, and most preferably in the range of 20 to 70 degrees, and the pilot bit pulling surface 12 may be formed to conform, at least partly, to the ring bit pulling surface 13, for instance by providing the pilot bit pulling surface 12 at a similar angle in relation to the radial direction 14 of the ring bit 3. According to further embodiments, the ring bit pulling surface 13 may be formed according to an embodiment or a combination of embodiments disclosed in connection with the ring bit 3 embodiments, and the pilot bit pulling surface 12 may be formed to conform, at least partly, to the ring bit pulling surface 13.

According to an embodiment, the first length 16 of the protrusion 6 in the direction of the longitudinal axis 4 is in the range of 30 to 100 percent, preferably in the range of 40 to 100 percent, more preferably in the range of 45 to 100 percent, and most preferably in the range of 50 to 100 percent, of the length 17 of the ring bit 3 in the direction of the longitudinal axis 4 of the drilling tool 1.

According to an embodiment, the angle 19 between the pilot bit striking surface 10 and the longitudinal direction 4 of the ring bit 3 is less than 90 degrees, for instance as shown in Figure 8, and preferably at least 70 degrees and most preferably at least 75 degrees. According to different embodiments, the angle 19 may be in the range of 70 to 90 degrees, preferably in the range of 70 to 89 degrees, and most preferably in the range of 75 to 89 degrees.

According to an embodiment, the pilot bit 2 and the ring bit 3 have at least two mutual positions, and wherein in one of the mutual positions the mutual movement of the pilot bit 2 and the ring bit 3 is limited at least in the direction of the longitudinal axis 4 of the drilling tool 1 and in one of the rotational directions of the ring bit 3 about the longitudinal axis 4. According to an embodiment, the mutual position, in which the mutual movement of the pilot bit 2 and the ring bit 3 is limited, is the drilling position of the drilling tool 1.

According to an embodiment, the drilling tool 1 further comprises a casing shoe 23. The casing shoe may be used to guide a casing configured to prevent the walls of the borehole from collapsing during drilling. Such casing shoes 23 are known in the art and are not explained here in more detail.

It will be obvious to a person skilled in the art that, as the technology advances, the inventive concept can be implemented in various ways. The invention and its embodiments are not limited to the examples described above but may vary within the scope of the claims, and embodiments disclosed may be combined.

## Claims

1. A ring bit for a drilling tool comprising an annular or cylindrical shape, wherein
the ring bit is configured to be provided around a pilot bit at a distal end of a drilling tool concentrically with the pilot bit, and
the ring bit comprises at least one protrusion protruding inwards from a first surface provided inside the ring bit,
the ring bit comprises at least one ring bit pulling surface, which ring bit pulling surface is formed in the protrusion and formed in relation to a radial direction of the ring bit in a direction of a longitudinal axis of the drilling tool in such a manner that a first length of the protrusion at the first surface in the direction of the longitudinal axis is greater than a second length of the protrusion at a second surface, wherein the second surface is defined by the inner-most surface of the protrusion and the first surface is provided at the base of the protrusion on the pulling surface side of the protrusion, wherein the second length is less than or equal to 80 percent of the first length, and wherein the first length of the protrusion is in the range of 30 to 100 percent of the length of the ring bit in the direction of the longitudinal axis of the drilling tool.

2. A ring bit according to claim 1, wherein the first length of the protrusion and the second length of the protrusion are measured along a same radial plane.

3. A ring bit according to claim 1 or 2, wherein the first length of the protrusion is greater than the second length of the protrusion at least at one point of the protrusion in the direction of the circumference of the ring bit.

4. A ring bit according to any one of claims 1 - 3, wherein the first length of the protrusion is greater than the second length of the protrusion at least at a point spaced from a circumferential edge of the protrusion.

5. A ring bit according to any one of claims 1 - 4, wherein the ring bit pulling surface is formed in relation to a radial direction of the ring bit in a direction of a longitudinal axis of the drilling tool in such a manner that the first length of the protrusion is greater than the second length of the protrusion by providing the ring bit pulling surface at an angle in relation to a radial direction of the ring bit in a direction of a longitudinal axis of the drilling tool.

6. A ring bit according to claim 5, wherein
the angle between the ring bit pulling surface and the radial direction of the ring bit is in the range of 10 to 70 degrees.

7. A ring bit according to any one of claims 1 - 6, wherein the ring bit is provided, at one end, with inserts for transferring impacts to points of contact with a borehole, and wherein the ring bit pulling surface is provided on the side of the protrusion directed towards the end provided with the inserts.

8. A drilling tool comprising
a longitudinal axis,
a distal end at the end of the drilling tool configured to be provided against a material to be drilled,
a pilot bit,
a ring bit according to any one of claims 1 - 7 and provided around the pilot bit at the distal end of the drilling tool concentrically with the pilot bit,
at least one groove provided on an outer surface of the pilot bit and shaped to receive the protrusion provided in the ring bit and to conform at least partly to the shape of the protrusion,
wherein the pilot bit is configured to transmit a striking force to the ring bit via a contact between a pilot bit striking surface and a ring bit striking surface, and wherein the pilot bit is configured to transmit a pulling force to the ring bit via a pilot bit pulling surface and a ring bit pulling surface,
wherein at least a part of the pilot bit striking surface and the pilot bit pulling surface are provided at opposite ends of the groove, at least a part of the ring bit striking surface and the ring bit pulling surface are provided at opposite ends of the protrusion, and the pilot bit pulling surface and the ring bit pulling surface are provided at the end of the pilot bit and the ring bit, respectively, which is directed towards the distal end.

9. A drilling tool according to claim 8, wherein the ring bit pulling surface and the pilot bit pulling surface are formed in relation to a radial direction of the ring bit in a direction of a longitudinal axis of the drilling tool in such a manner that the first length of the protrusion is greater than the second length of the protrusion by providing the ring bit pulling surface and the pilot bit pulling surface at an angle in relation to a radial direction of the ring bit in a direction of a longitudinal axis of the drilling tool.

10. A drilling tool according to claim 8 or 9, wherein
the angle between the pilot bit striking surface and the longitudinal direction of the ring bit is less than 90 degrees.

11. A drilling tool according to anyone of claims 8 - 10, wherein
the pilot bit and the ring bit have at least two mutual positions, and wherein
in one of the mutual positions the mutual movement of the pilot bit and the ring bit is limited at least in the direction of the longitudinal axis of the drilling tool and in one of the rotational directions of the ring bit about the longitudinal axis.

12. A drilling tool according to anyone of claims 8 - 11, wherein
the at least one groove and the protrusion are shaped in such a manner that when the protrusion is received in the groove, the mutual movement of the ring bit and the pilot bit is limited in at least one mutual position of the ring bit and the pilot bit by the protrusion provided in the groove at least in the direction of the longitudinal axis of the drilling tool.

13. A drilling tool according to anyone of claims 8 - 12, wherein
the at least one groove and the protrusion are shaped in such a manner that when the protrusion is received in the groove, the mutual movement of the ring bit and the pilot bit is limited in at least one mutual position of the ring bit and the pilot bit by the protrusion provided in the groove at least in one of the rotational directions of the ring bit about the longitudinal axis.

14. A drilling tool according to any one of claims 8 - 13, wherein
the drilling tool further comprises a casing shoe.
